## Europäisches Patentamt
## European Patent Office
## Office européen des brevets

(19)

(11) Numéro de publication: **0 116 000 B1**

(12)

# FASCICULE DE BREVET EUROPEEN

(45) Date de publication du fascicule du brevet:
14.05.86

(51) Int. Cl.⁴: **F 16 D 66/02**

(21) Numéro de dépôt: 84400227.9

(22) Date de dépôt: 02.02.84

(54) Frein à disque à étrier coulissant et élément de friction pourvu d'indicateur d'usure électrique.

(30) Priorité: 02.02.83 FR 8301619

(43) Date de publication de la demande:
15.08.84 Bulletin 84/33

(45) Mention de la délivrance du brevet:
14.05.86 Bulletin 86/20

(84) Etats contractants désignés:
DE GB IT

(56) Documents cités:
EP - A - 0 030 184
DE - A - 2 854 357
FR - A - 2 111 070
FR - A - 2 221 647
FR - A - 2 399 576
FR - A - 2 420 692
FR - E - 88 388
GB - A - 917 898
GB - A - 1 582 567
US - A - 2 265 393
US - A - 2 985 932
US - A - 3 023 470

(73) Titulaire: **BENDIX France, 126, rue de Stalingrad, F-93700 Drancy (FR)**

(72) Inventeur: **Le Marchand, Claude, 8 Allée des Tilleuls, F-95330 Domont (FR)**

(74) Mandataire: **Le Moenner, Gabriel et al, SERVICE BREVETS BENDIX 44, Rue François 1er, F-75008 Paris (FR)**

ACTORUM AG

## Description

La présente invention concerne les freins à disque à étrier coulissant et à élément de friction pourvu d'indicateur d'usure électrique.

L'invention concerne les freins à disque du type comportant un support fixe définissant une ouverture centrale délimitée périphériquement par deux bras et dans laquelle coulissent une paire d'éléments de friction et un étrier comportant au moins un moteur de frein d'actionnement des éléments de friction, au moins une clavette étant intercalée entre une surface formée intérieurement dans l'extrémité d'un des bras du support fixe et une surface adjacente correspondante de l'étrier, de façon à verrouiller ainsi radialement l'étrier dans l'ouverture du support fixe, des moyens étant prévus pour immobiliser axialement la clavette par rapport à l'extrémité du bras du support fixe.

Une telle structure de frein est décrite dans le deuxième certificat d'addition N° 88 388 au brevet français N° 1 431 745.

La présente invention concerne plus particulièrement un frein du type ci-dessus, comportant en outre un organe d'immobilisation pour immobiliser axialement la clavette, comprenant des parties d'extrémité coopérant en engagement avec les extrémités axialement opposées de la clavette. Un frein de ce type est décrit dans la demande de brevet français FR-A-2 221 647 Girling où l'organe de verrouillage est constitué par une lame élastique interposée entre une face de coulissement dirigée vers le haut de la clavette et une face de coulissement correspondante de l'étrier, la clavette, de même largeur que l'extrémité du bras correspondant, étant retenue par les parties d'extrémité de l'organe de verrouillage qui comportent des pattes venant en prise avec les bords axialement opposés de l'extrémité du bras.

Dans les véhicules modernes, de tels freins à disque sont actuellement généralement équipés d'éléments de friction pourvus d'indicateurs d'usure électriques reliés chacun à un équipement de visualisation et de contrôle du véhicule par un brin de conducteur de raccordement. Si l'indicateur d'usure de l'élément de friction intérieur du frein (côté châssis du véhicule) ne pose pas de problème particulier pour son raccordement à la circuiterie du véhicule, il n'en est pas de même pour l'indicateur d'usure de l'élément de friction extérieur du frein dont le brin de conducteur de raccordement doit être ramené vers le côté intérieur du frein, à l'extérieur du disque, dans une zone où il est susceptible de ne pas interférer avec la jante de la roue abritant au moins partiellement le frein, si possible à l'écart des zones chaudes du frein. Or, ces freins sont habituellement dépourvus de moyens de guidage du brin de conducteur, lequel est le plus souvent simplement rabattu vers l'intérieur du frein par-dessus la périphérie de l'étrier ou du support fixe. Un dispositif annexe spécifique pour le maintien et le guidage à l'écart de la structure de frein du brin de conducteur d'un indicateur d'usure est décrit dans le document FR-A-2 399 576. Le système décrit dans ce document nécessite toutefois des éléments spécifiques additionnels obérant les coûts de fabrication et de montage du frein et augmentant considérablement les dimensions radiales de ce dernier.

Le document EP-A-0 030 184 décrit par ailleurs un frein à disque à étrier monté coulissant par rapport à un organe support fixe sur des colonnettes axiales, les éléments de friction coulissant par rapport à l'étrier par l'intermédiaire d'au moins une clavette immobilisée axialement par rapport à l'étrier au moyen d'un élément d'immobilisation élastique dont les parties d'extrémité coopèrent en engagement avec les extrémités axialement opposées de la clavette, de part et d'autre, axialement, de la zone adjacente de l'étrier, ces parties d'extrémité étant reliées par une partie intermédiaire prenant appui sur une face adjacente de l'étrier et s'étendant axialement immédiatement au-dessus de la clavette dans l'espace entre cette face de l'étrier et les extrémités des pattes de coulissement des éléments de friction, c'est-à-dire dans une zone exposée du frein devant être maintenue parfaitement libre pour assurer le coulissement des éléments de friction.

La présente invention a pour objet de proposer un agencement de frein du type défini plus haut, assurant un verrouillage simple et efficace de la clavette et réalisant simultanément, sans éléments additionnels particuliers, un guidage et un positionnement efficaces et fiables du brin de conducteur d'indicateur d'usure dans une zone peu agressive du frein.

Pour ce faire, selon une caractéristique de l'invention, dans un frein à disque du type considéré, dont au moins l'élément de friction extérieur est pourvu d'un détecteur d'usure électrique, les parties d'extrémité de l'organe d'immobilisation de clavette sont reliées par une partie intermédiaire chevauchant extérieurement l'extrémité du bras du support fixe et définissant au moins partiellement, avec la zone extérieure adjacente de cette extrémité du bras, un chenal de passage pour le brin de conducteur de raccordement du détecteur d'usure électrique.

Selon une autre caractéristique de l'invention, cette zone extérieure de l'extrémité du bras présente une partie intérieurement en retrait s'étendant sensiblement axialement à l'aplomb de la partie intermédiaire de l'organe de verrouillage en configuration de montage dans le frein. L'organe de verrouillage est avantageusement élastique et réalisé à partir d'un fil métallique dont la partie intermédiaire présente un profil sinueux s'étendant au moins une fois transversalement à recouvrement de la partie intérieurement en retrait de l'extrémité du bras.

D'autres caractéristiques et avantages de la présente invention ressortiront de la description suivante de modes de réalisation, donnés à titre illustratif mais nullement limitatif, faite en relation avec les dessins annexés, sur lesquels:

la figure 1 est une vue schématique en perspective illustrant l'aménagement d'un chenal de passage pour brin de conducteur de raccordement selon l'invention,

la figure 2 est une demi-vue du côté intérieur d'un frein selon l'invention,

les figures 3 et 4 sont des vues de face et de dessus, respectivement, de l'élément d'immobilisation de clavette du mode de réalisation des figures 1 et 2, et

la figure 5 est une vue partielle analogue à la figure 2 montrant un autre mode de réalisation d'un chenal de passage selon l'invention.

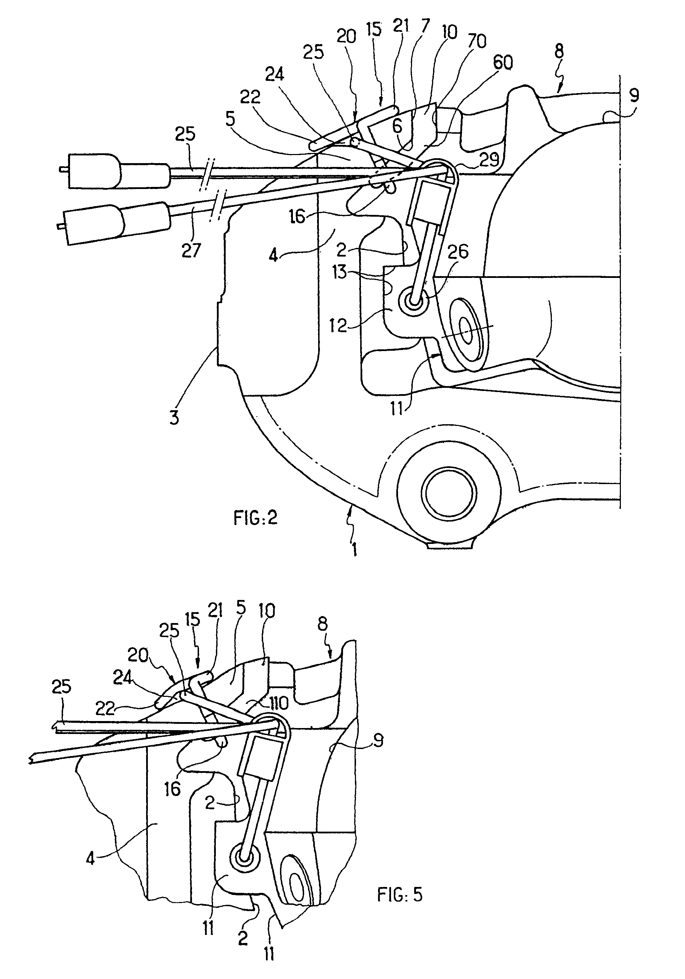

Comme représenté sur les dessins, un frein à disque selon l'invention comprend un support fixe 1 définissant une ouverture centrale 2 en forme générale de U ouvert vers le haut, délimitée périphériquement (c'est-à-dire comme vue dans le sens de rotation du disque 3 associé au frein) par deux bras, tels que celui représenté en 4, terminés par des extrémités 5 convergeant l'une vers l'autre pour refermer partiellement l'ouverture du U et définir dans chaque extrémité de bras une surface de coulissement dirigée vers l'intérieur 6 prolongée vers l'extérieur par une face de coulissement droite 7. Dans l'ouverture 2 est monté à coulissement un étrier 8 comportant, sur son côté intérieur, au moins un moteur de frein 9 et dont les zones d'extrémité périphériquement opposées forment des surfaces de coulissement 60 et 70 sensiblement parallèles aux surfaces de coulissement correspondantes 6 et 7 des bras 4 du support fixe 1, une clavette 10 en forme de cornière au profil correspondant étant intercalée entre ces surfaces de coulissement 6, 60 et 7, 70. Le frein comporte en outre une paire d'éléments de friction 11, dont l'élément de friction intérieur est visible sur les figures 2 et 5, actionnables par le moteur 9 de l'étrier 8 et montés à coulissement dans le support fixe 1 au moyen de saillies latérales 12 reçues dans des découpes en retrait 13 de profil correspondant de l'ouverture 2 au niveau de la zone intermédiaire des bras 4.

Conformément à l'invention, la clavette 10 est immobilisée axialement par rapport à l'extrémité 5 du bras 4 du support fixe 1 par un élément d'immobilisation 15 qui est constitué, dans les modes de réalisation représentés, à partir d'un fil de métal élastique, comprenant des parties d'extrémité 16 et 17 reçues en engagement dans des trous traversants 18 et 19, respectivement, formés dans les extrémités axialement opposées, dépassant de part et d'autre de l'extrémité 5 du bras 4, de l'aile 110 de la clavette 10 interposée entre la surface de coulissement 6 dirigée vers l'intérieur de l'extrémité 5 du bras 4 et la surface de coulissement correspondante 60 de l'étrier 8. Les parties d'extrémité 17 et 18 s'étendent vers l'extérieur sensiblement radialement et sont reliées l'une à l'autre par une partie intermédiaire 20 chevauchant extérieurement l'extrémité 5 et formant, dans l'exemple représenté, deux convolutions 21 dans un sens reliées par une convolution centrale dans l'autre sens 22, la partie intermédiaire 20 s'étendant, comme on le voit sur la figure 3, dans un plan sensiblement perpendiculaire aux parties d'extrémité 16 et 17 et sensiblement tangeant à la surface périphérique extérieure de l'extrémité 5. Dans l'exemple représenté, la partie d'extrémité 16 est profilée en forme de crochet et est engagée en premier dans l'ouverture 18 de la clavette 10, l'autre partie d'extrémité 17 étant profilée en forme d'agrafe antiretour qui est forcée élastiquement dans l'orifice correspondant 19 de la clavette, la partie intermédiaire 20 chevauchant extérieurement, en configuration de montage, l'extrémité 5 du bras 4 du support fixe 1.

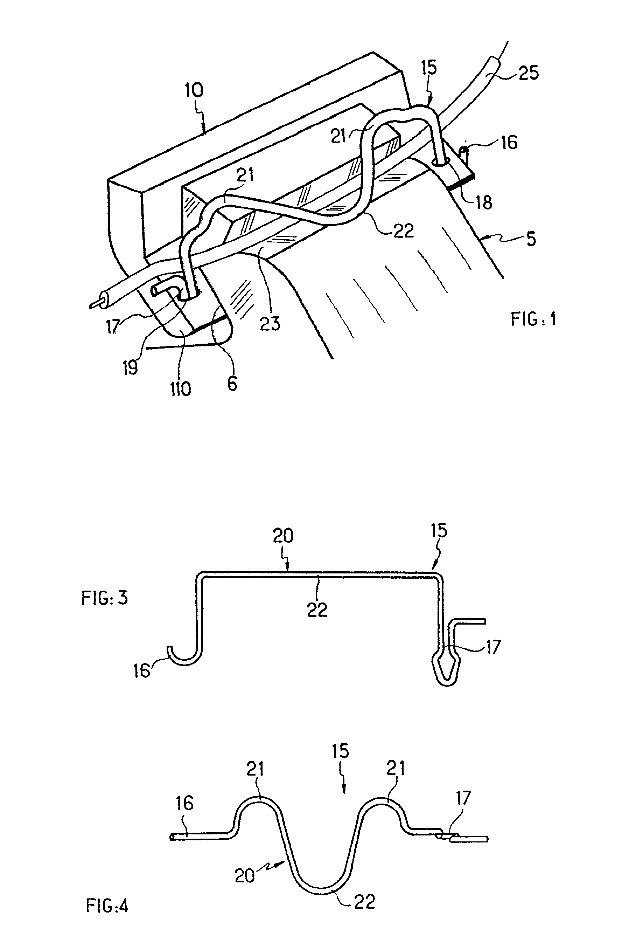

Dans le mode de réalisation des figures 1 et 2, cette partie d'extrémité 5 du bras 4 comporte une découpe ou gorge axiale 23 radialement en retrait par rapport au profil extérieur de l'extrémité 5 du bras 4, cette gorge 23 étant aménagée de façon que, en configuration de montage, elle soit partiellement fermée par des portions de la partie intermédiaire 20 de l'élément d'immobilisation 15, comme on le voit bien sur la figure 1. La partie intermédiaire sinueuse 20 et cette gorge 23 définissent ainsi un chenal de passage axial 24 pour le brin 25 de conducteur de raccordement de l'indicateur d'usure de l'élément de friction extérieur, qui peut être du type de celui représenté en 26 pour le patin intérieur, dont le brin de conducteur de raccordement est repéré en 27. Le brin de conducteur de raccordement 25 peut ainsi être ramené d'un côté à l'autre du frein dans le chenal 23 en étant parfaitement maintenu et guidé et sans être soumis à des contraintes particulières. Comme représenté sur la figure 2, les deux brins de conducteur de raccordement 25 et 27 des deux détecteurs d'usure des éléments de friction peuvent être regroupés à partir d'un organe de renvoi 29 porté par exemple par l'étrier 8.

Dans la variante de réalisation représentée sur la figure 5, le profil extérieur de l'extrémité 5 du bras 4 présente localement un profil extérieur non convexe, par exemple légèrement concave, la partie intermédiaire 20 de l'élément d'immobilisation et de guidage 15 étant par contre bombée transversalement pour ménager centralement, avec la périphérie de l'extrémité 5, le chenal 24 de passage du brin 25.

Quoique la présente invention ait été décrite en relation avec des modes de réalisation particuliers, elle ne s'en trouve pas limitée mais est au contraire susceptible de modifications et de variantes qui apparaîtront à l'homme de l'art. En particulier, la partie intermédiaire 20 de l'élément d'immobilisation 15 peut présenter tout profil adéquat pourvu qu'il chevauche en au moins un endroit la gorge 23 ou forme au moins deux arceaux de passage du brin 25. De même, l'élément d'immobilisation 15 peut être réalisé à partir d'une feuille métallique convenablement découpée et profilée pour assurer les fonctions d'immobilisation axiale de la clavette 10 en coopérant avec les extrémités axialement en saillie de cette dernière de part et d'autre de l'extrémité 5 du bras 4 et formant, à l'extérieur de cette extrémité 5, un chenal de passage pour le brin 25.

**Revendications**

1. Frein à disque comportant un support fixe (1) définissant une ouverture centrale (2) délimitée périphériquement par deux bras (4) et dans laquelle coulissent une paire d'éléments de friction (11) et un étrier (8) comportant au moins un moteur de frein (9) d'actionnement des éléments de friction (11), au moins une clavette (10) étant intercalée entre une surface (6) formée intérieurement dans l'extrémité (5) d'un des bras (4) du support fixe (1) et une surface adjacente correspondante (60) de l'étrier (8), la clavette (10) étant immobilisée axialement par rapport à l'extrémité (5) du bras (4) par un organe d'immobilisation (15) comprenant des parties d'extrémité (16, 17), coopérant en engagement avec les extrémités axialement opposées de la clavette (10), au moins l'élément de friction extérieur du frein étant pourvu d'un détecteur électrique d'usure de la garniture de cet élément de friction, comprenant un brin (25) de conducteur de raccordement, caractérisé en ce que les parties d'extrémité (16, 17) de l'organe d'immobilisation (15) sont reliées par une partie intermédiaire (20) chevauchant extérieurement l'extrémité (5) du bras (4) du support fixe (1) et définissant au moins partiellement, avec la zone extérieure adjacente de cette extrémité (5) du bras (4), un chenal de passage (24) pour le brin (25) de conducteur de raccordement.

2. Frein à disque selon la revendication 1, caractérisé en ce que la zone extérieure de l'extrémité (5) du bras (4) présente une partie intérieurement en retrait (23) s'étendant sensiblement axialement à l'aplomb de la partie intermédiaire (20) de l'organe d'immobilisation (15).

3. Frein à disque selon la revendication 1 ou la revendication 2, caractérisée en ce que l'organe d'immobilisation (15) est élastique.

4. Frein à disque selon la revendication 3, caractérisé en ce que l'organe d'immobilisation (15) est réalisé à partir d'un fil métallique élastique.

5. Frein à disque selon la revendication 4, caractérisé en ce que la partie intermédiaire (20) de l'organe d'immobilisation (15) présente un profil sinueux (21, 22) et s'étend sensiblement dans un plan perpendiculaire aux parties d'extrémité (16, 17).

6. Frein à disque selon la revendication 5, caractérisé en ce que les parties d'extrémité (16, 17) sont reçues dans des évidements (18, 19) des extrémités axialement opposées de la partie (110) de la clavette (10) coopérant avec la surface (6) formée intérieurement dans l'extrémité (5) du bras (4) du support fixe (1).

## Patentansprüche

1. Scheibenbremse mit einem ortsfesten Bremsträger (1), der eine zentrale Öffnung (2) aufweist, die am Umfang von zwei Armen (4) begrenzt ist und in der zwei Bremsbacken (11) gleiten, und einem Bremssattel (8), der mindestens einen Bremsmotor (9) zur Betätigung der Bremsbacken (11) aufweist, wobei mindestens ein Zwischenstück (10) zwischen einer Fläche (6), die innerhalb des Endes (5) eines der Arme (4) des Bremsträgers (1) gebildet ist, und einer entsprechenden angrenzenden Fläche (60) des Bremssattels (8) eingesetzt ist, wobei das Zwischenstück (10) axial bezüglich des Endes (5) des Arms (4) durch ein Sicherungsteil (15) festgelegt ist, das Endabschnitte (6, 7) aufweist, die an den axial gegenüberliegenden Enden des Zwischenstücks (10) angreifen, wobei mindestens der äussere Bremsbacken der Bremse mit einem elektrischen Detektor zum Feststellen der Abnutzung des Reibbelages dieses Bremsbackens versehen ist, der ein leitendes Anschlusskabel (25) aufweist, dadurch gekennzeichnet, dass die Endabschnitte (16, 17) des Sicherungsteils (15) durch einen Zwischenabschnitt (20) verbunden sind, der von aussen das Ende (5) des Arms (4) des Bremsträgers (1) umgreift und zumindest teilweise mit dem angrenzenden Aussenbereich dieses Endes (5) des Arms (4) eine Durchtrittsrinne (24) für das Anschlusskabel (25) bildet.

2. Scheibenbremse nach Anspruch 1, dadurch gekennzeichnet, dass der Aussenbereich des Endes (5) des Arms (4) einen nach innen zurückversetzten Abschnitt (23) aufweist, der sich an der Stelle des Zwischenabschnittes (20) des Sicherungsteils (15) im wesentlichen axial erstreckt.

3. Scheibenbremse nach Anspruch 1 oder 2, dadurch gekennzeichnet, dass das Sicherungsteil (15) elastisch ist.

4. Scheibenbremse nach Anspruch 3, dadurch gekennzeichnet, dass das Sicherungsteil (15) aus einem elastischen Metalldraht hergestellt ist.

5. Scheibenbremse nach Anspruch 4, dadurch gekennzeichnet, dass der Zwischenabschnitt (20) des Sicherungsteils (15) ein sinusförmiges Profil (21, 22) hat und im wesentlichen in einer zu den Endabschnitten (16, 17) senkrecht verlaufenden Ebene liegt.

6. Scheibenbremse nach Anspruch 5, dadurch gekennzeichnet, dass die Endabschnitte (16, 17) in Ausnehmungen (18, 19) der axial gegenüberliegenden Enden des Abschnitts (110) des Zwischenstücks (10) sitzen, der mit der innerhalb des Endes (5) des Arms (4) des Bremsträgers (1) gebildeten Fläche (6) zusammenwirkt.

## Claims

1. A disc brake comprising a fixed support (1) defining a central opening (2) peripherally delimited by two arms (4) and slidingly receiving a pair of friction members (11), and a caliper (8) comprising at least one brake motor (9) for actuating the friction members (11), at least a key member (10) being interposed between one surface (6) formed interiorly within the end (5) of one of the arms (4) of the fixed support (1), and a corresponding adjacent surface (60) of the caliper (8), the key member (10) being immobilized axially with respect to the end (5) of the arm (4) by an immobilizing element (15) comprising end portions (16, 17) engaging the axially opposite ends of the key member (10), at least the exterior friction member of the brake being provided with an electrical detector for detecting wear of the friction layer of this friction member, comprising a conducting connector cable (25), characterized in that the end portions (16, 17) of the immobilizing element (15) are connected by an intermediate portion (20) exteriorly encircling the end (5) of the arm (4) of the fixed support (1) and defining at least partially with the adjacent exterior zone of said end (5) of the arm (4) a channel (24) for passage of the conducting connector cable (25).

2. The disc brake of claim 1, characterized in that the exterior zone of the end (5) of the arm (4) presents an interiorly recessed portion (23) extending substantially axially adjacent the intermediate portion (20) of the immobilizing element (15).

3. The disc brake of claim 1 or claim 2, characterized in that the immobilizing element (15) is resilient.

4. The disc brake of claim 3, characterized in that the immobilizing element (15) is made from a resilient metallic wire.

5. The disc brake of claim 4, characterized in that the intermediate portion (20) of the immobilizing element (15) is of a sinus-shaped profile (21, 22) and extends substantially in the plane perpendicular to the end portions (16, 17).

6. The disc brake of claim 5, characterized in that the end portions (16, 17) are received in recesses (18, 19) of the axially opposite ends of the portion (110) of the key member (10) cooperating with the surface (6) formed interiorly in the end (5) of the arm (4) of the fixed support (1).

FIG : 1

FIG: 3

FIG:4

FIG:2

FIG:5